# EUROPEAN PATENT APPLICATION

(11) **EP 0 598 169 A1**
(43) Date of publication of application: **25.05.1994**
(21) Application number: 92830626.5
(22) Date of filing: 18.11.1992
(51) Int. Cl.: B29C 45/40, B29C 45/37, B29C 45/33

(54) **An injection molding die for the production of numerous series of products, in particular buttons and the like**

(71) Applicant: GOBBI GIUSEPPE & C. S.n.c., I-29010 Calendasco (Piacenza) (IT)
(72) Inventor: Gobbi, Giuseppe, I-29010 Rottofreno, (Piacenza) (IT)
(74) Representative: Lanzoni, Luciano

(57) **Abstract**

The injection-molding die for the realisation of numerous series of products, in particular buttons and the like, comprises a first (2) and a second (6) plates, bearing a bottom die (3) crossed by a plurality of expulsion pins (4), and respectively a punch (7) facing the bottom die (3), and is structured in such a way that the expulsion pins (4) are supported and guided by a relative support element or extraction box (10) interchangeably housed and blocked in a respective housing (11) made in the first plate (2); the extraction box (10) supporting on one side the bottom die (3) and on the opposite side being interested by an end of expulsion shafts (14) parallel to the expulsion pins (4) and acting on the said expulsion pins (4) on the action of respective command organs (26), so that when the bottom die (3) is to be changed it can be substituted in a single block and modularly, together with the relative extraction box (10) and expulsion pins (4).

## Description

The invention relates to an injection molding die for the production in particular of buttons and the like, which are made in numerous series, with each said series being constituted of relatively few pieces.

The injection-molding dies in the prior art for the production of buttons, which for the sake of simplicity will be the type referred to in this description, are of the type commonly known as "two-plate".

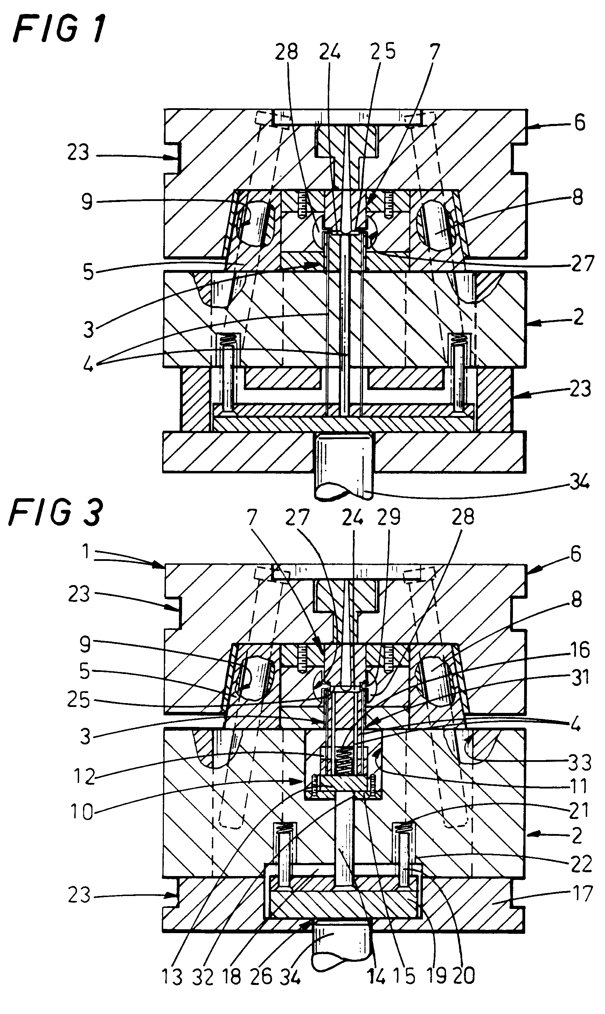

A known-type die is illustrated in figure 1 and is constituted by, with reference to the said figure 1, a first plate 2 and a second plate 6, parallel to each other and bearing, the first a bottom die 3 and the other a corresponding punch 7, and being fixable to corresponding organs of a press which organs support and activate the said two plates 2 and 6 in order to bring the bottom die 3 and the punch 7 into reciprocal contact and to expel the buttons 28 thus produced.

The bottom die 3 and the punch 7 define one or, usual in the case of buttons, more than one cavities which must be filled with the material to be shaped for the obtaining of, at the opening of the die, the desired buttons 28.

For making buttons 28 provided with holes through which cotton will be passed to fix them to cloth, dies simply equipped with a bottom die 3 bearing several hollow indentations 24 are used, each corresponding to a single button, and a single punch 7, bearing the relative cores or males 25.

In cases where the buttons 28 have to be equipped with a ring or stalk for their fixing to the cloth, the bottom die 3 and the punch 7 exhibit corresponding hollow indentations 24 and relative cores or males 25 for the realisation of the stalks, and two coplanar plates are envisaged, of known type known as sliding shutting clamps 5, exhibiting respective hollow indentations 27 for the realisation of the button 28 bodies. In this case the bottom die 3 is also of known type referred to as stalk shaping and casting fillet, while the punch 7 is again of known type and commonly called stalk-countershaping fillet.

The sliding shutting clamps 5 are borne by the first plate 2 on opposite bands of the bottom die 3 and are equipped with inclined holes 9 into which are inserted, during the reciprocal approaching of the first and the second plates 2 and 6, bars 8 equally inclined and fixed to the second plate 6 by opposite bands of the punch 7.

The gradual insertion of the inclined bars 8 into respective holes 9 in the sliding shutting clamps 5 causes a corresponding approaching of the said sliding shutting clamps 5 up until they come into contact with the bottom die 3 and the punch 7, which have in the meantime come into reciprocal contact.

For the expulsion of the buttons 28 or the relative stalks and heads or casts from the relative hollow indentations 24 and 27 expulsion pins 4 are envisaged, supported and guided by the first plate 2 and the bottom die 3 and activated by the opening mechanism of the press to which the die is connected and which intervenes at the end of the opening run of the first plate 2 and second plate 6. The said opening mechanism is represented in figure 1 by a command shaft denoted by 34 acting on command organs 26 of the axial movement of the expulsion pins 4. The said command organs 26 are constituted by a small plate perpendicular to the expulsion pins 4 to which plate the ends of the said expulsion pins 4, arranged at the side of the command shaft 34, are fixed.

The types of buttons made are however very numerous with regard to both their shape and their size, so that, for practical and economic reasons, it is envisaged that the relative cores or males and hollow indentations are made in small plates which are substitutable and interchangeable according to the shape and size of the buttons to be produced. Observing the die of figure 1, the bottom die 3 and the punch 7 are movably fixed to the first plate 2 and respectively to the second plate 6 and the sliding shutting clamps 5 are each made in at least two dismountable parts.

It often happens that, with a variation in the shape, and above all in the size, which lead to a variation in the number of the hollow indentations, the expulsion pins 4 are no longer in the correct positions in both configurations.

This means that, when the type of stalk or the number of hollow indentations is changed, or in some case the kind of indentation, it is necessary to dismount all of the die components and perform modifications on the plates supporting and guiding the expulsion pins 4. It should be noted that, looking at figure 1, it is necessary also to remove the expulsion pins 4 from the plate 26 and to rework the said plate according to the new positions of the expulsion pins 4.

This operation, apart from being expensive simply because of the loss of time necessary for the dismounting and remounting of the support and guide plates of the expulsion pins 4, is also expensive with regard to the mechanical working of the plates themselves. It should also not be forgotten that the expulsion pins 4 have very small transversal sizes, even as small as a few tenths of a millimetre, with consequent increases in the mechanical working costs.

The problem of costs for the modifying of the plates is aggravated by the fact that the buttons have a very low retail price and the costs are not amply covered by the said expenses.

The aim of the present invention is thus to provide a die which permits of realising a very high number of button types in a way which is decidedly more economical than any solution offered at present.

The invention, as it is characterised in the claims that follow, solves the above problem by providing a die for the injection molding of numerous series of products, in particular buttons or similar, of the type comprising a first plate supporting a bottom die crossed by a plurality of expulsion pins, and a second plate, supporting a punch facing the said bottom die and being approachingly and distancingly mobile with the said first plate, the said expulsion pins being axially moved by respective command organs, characterised in that the said expulsion pins are supported and guided by a support element of extraction box supporting also the said bottom die, interpositioned between the said bottom die and the said command organs and housed and blocked interchangeably in a respective housing made in the said first plate; the said first plate supporting and guiding a plurality of expulsion shafts parallel and/or aligned to the said expulsion pins, connected to the said command organs and acting on the said support element or extraction box for the axial movement of the said expulsion pins.

The invention will be described in more detail in the description that follows, with reference to the accompanying figures which represent one embodiment, described purely in the form of a non-limiting example, and in which:
- Figure 1 shows a transversal section of a die of known type, in its operative configuration of material injection;
- Figure 2 shows a perspective view of a particular of the die of the present invention, structured for the making of buttons with stalks, illustrated in its rest configuration;
- Figure 3 shows a transversal section of the die according to the invention, structured for the realisation of buttons with stalks and illustrated in its operative configuration of material injection;
- Figure 4 shows a transversal section of the die of figure 3, in its rest configuration;
- Figure 5 shows a transversal section of the die of figure 3 in its expulsion or extraction configuration of the deadheads and pieces of the relative cavity; and
- Figure 6 shows a transversal section of the die of the invention structured for the making of buttons without stalks and illustrated in its operative configuration of material injection.

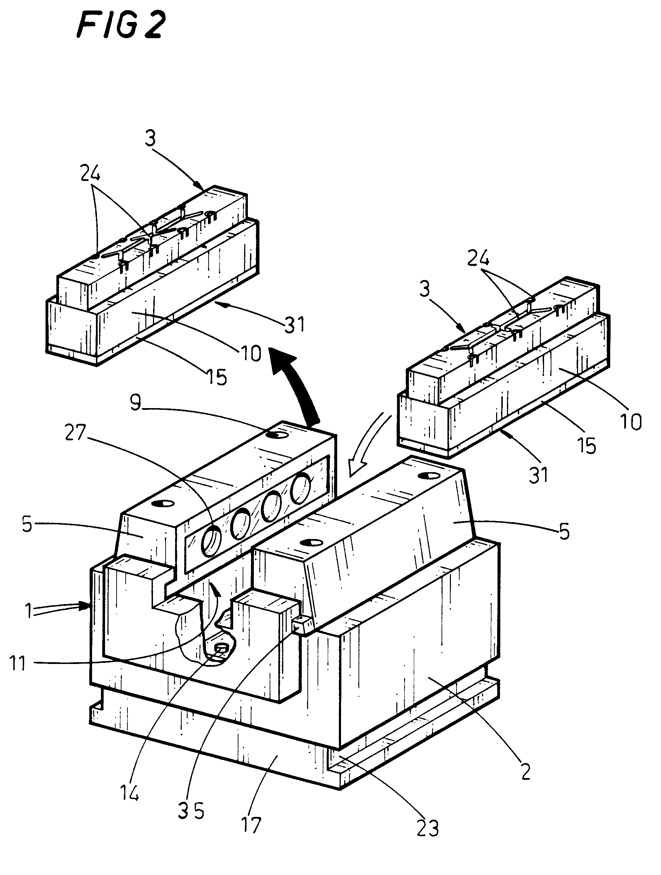

With reference to figures 2 to 5, the die according to the invention for pressing and injection of numerous series of few products, in particular buttons and the like, is indicated in its entirety by 1 and is constituted by at least a first 2 and a second plates 6 parallel between themselves. The plates 2 and 6 are equipped with respective anchorage housings 23 to movement organs of a press to which the die 1 is associated according to known and therefore not illustrated methods. The press is illustrated only by way of an axially-mobile command shaft 34, making part of the opening mechanism of the press and acting on command organs 26 of the die 1.

The first plate 2 supports a bottom die 3 crossed by a plurality of expulsion pins 4 and, in the case illustrated in the figures, a couple of plates or sliding shutting clamps 5 arranged coplanarly between themselves and on opposite bands of the bottom die 3. The expulsion pins 4 are axially mobile on activation of the command organs 26. The sliding shutting clamps 5 are mobile, in a way which will be described in detail hereinafter, parallel to each other when approaching for distancing from the said bottom die 3 along respective guides 35 made in the said sliding shutting clamps 5 and in the first plate 2 as illustrated in figure 2. The bottom die 3 and the sliding shutting clamps 5 exhibit respective hollow indentations 24 and 27 for the making of buttons 28.

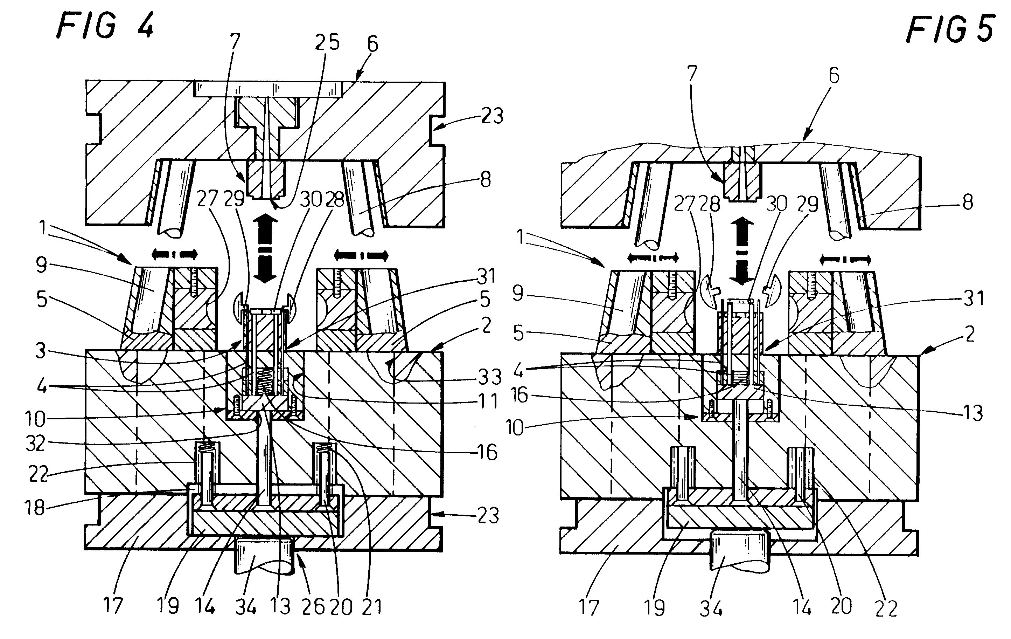

The second plate 6 supports a punch 7 facing the bottom die 3 and, in the case illustrated in figures from 2 to 6, a plurality of inclined bars 8 arranged on opposite bands of the punch 7. The punch 7 exhibits cores or males 25 facing the said hollow indentations 24 of the bottom die 3. The inclined bars 8 reciprocally diverge towards the sliding shutting clamps 5 and have their free ends facing, when the first and second plates 2 and 6 are reciprocally distanced, as in figure 4, respective holes 9 correspondingly bored in the sliding shutting clamps 5. As illustrated in particular in figures 3 and 4, housings 33 are bored in the first plate 2 in which housings 33 the inclined bars 8 can slide freely, that is without any movement imposed, during the reciprocal approaching of the first plate 2 and the second plate 6.

The inclination of the inclined bars 8 is such that, during the reciprocal approaching of the plates 2 and 6, the said inclined bars 8 insert into the corresponding holes 9 of the sliding shutting clamps 5 and force them reciprocally to approach up until they contact with the bottom die 3 and the punch 7, which in the meantime have been brought into reciprocal contact by the approaching of the first plate 2 and the second plate 6.

The expulsion pins 4 are supported and guided by a respective support element or extraction box 10, called hereinafter only by the latter aforegoing name, housed inside a respective housing 11 made in the first plate 2 and interpositioned between expulsion pins 4 and the command organs 26. The extraction box 10 is housed in the housing 11 in such a way as to complete the surface continuity of the first plate 2 which is worked so as to realise the said housing 11. The bottom die 3 is fixed to the extraction box 10, externally to the said first plate 2 and in a known way (not illustrated), so as to realise a single element or die-expeller module 31 as will become evident hereinafter. The extraction box 10 exhibits, at its side opposite to the side bearing the bottom die 3, a slidable housing 12 for a small expulsion plate 13 arranged perpendicularly to the expulsion pills 4. The housing 12 is externally closed internally to the first plate 2 by a closing plate 15 which defines the run of the expulsion plate 13.

The ends of the expulsion pins 4 act on one of the opposite faces of the expulsion plate 13, which ends are not destined to perform the actual expulsion, while on the other face of the said expulsion plate 13 expulsion shafts 14 act, which expulsion shafts 14 are supported and guided by the same first plate 2 and which cross the closing plate 15 at the said holes or at a single longitudinal slot 32. As illustrated in figure 3, compression springs 16 are provided internally to the housing 12, which compression springs 16 are interpositioned between the bottom of the said housing 12 and the expulsion plate 13 and maintain the said expulsion plate 13 in contact with the closing plate 15. The presence of the compression springs 16 permits of maintaining the expulsion pins 4 in a rest position in which they do not penetrate with their operative ends into the hollow indentations 24 of the bottom die 3. As illustrated in figure 3, the expulsion plate 13 is made in two parts, not separately denoted, to block the corresponding end of the expulsion pins 4 so as the said expulsion pins 4 and the expulsion plate 13 behave as a single body.

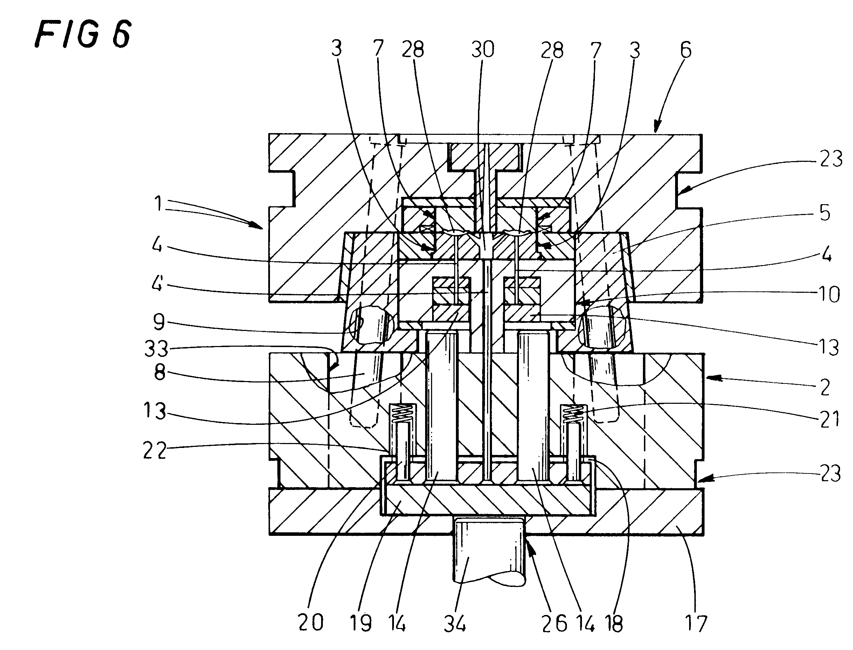

The first plate 2 is coupled to a fixing plate 17 with which it defines a seating 18 for an expulsion plate 19 to which, analogously to the expulsion pins 4and the respective expulsion plate 13, the free ends of the expulsion shafts 14 are fixed. Guide pin 20 ends are fixed to the same fixing plate 17, on which guide pin 20 ends respective compression springs 21 are wound. Both the guide pins 20 and the compression spring 21 are housed in respective seatings 22 made in the first plate 2. The compression springs 21 act on the expulsion shafts 14 exactly like the compression springs 16 act on the expulsion pins 4 and they keep the expulsion shafts 14 in a rest position in which they leave the expulsion plate 13 in contact with the closing plate 15. The expulsion plate 19 and the expulsion shafts 14 constitute the command organs 26 which axially move the expulsion pins 4 and which are activated by the command shaft 34. As illustrated in figure 6, which shows a bottom die 3 for the making of buttons 28 without ring or stalk 29, the bottom die 3 and the relative extraction box 10 are both realised in two independent parts so as to realise two die-expeller elements 31, independent of each other. In this embodiment, the die-expeller elements 31 are connected to the opposite faces of the sliding shutting clamps 5 and are mobile with them. In this embodiment, the expulsion pins 4 relative to the heads or casts 30 are connected directly to the expulsion plate 19 and are guided by the first plate 2 are denoted by 4' in order to differentiate them from the others. This is possible for the reason that the expulsion pins 4' do not cross the bottom dies 3 but are arranged between them. As can be seen in figure 6, the expulsion plates 13 are aligned with the expulsion shafts 14 only when the sliding shutting clamps 5 are distanced between themselves since it is in this configuration, not illustrated, that the bottom die 3 or dies 3 and the punch 7 are reciprocally distanced and the expulsion of the buttons 28 from the die 1 can occur.

In figure 2 the special characteristic of the invention is evidenced, consisting in the fact that one die-expeller element 31, constituted by an extraction box 10 and a relative bottom die 3 equipped with corresponding expulsion pins 4 is housed in the respective housing 11 of the first plate 2 and fixed there interchangeably with another die-expeller elements 31.

It is thus evident that, independently of what happens for the punch 7 and the sliding shutting clamps 5 when, for any reason, the substitution of the bottom die 3 and the expulsion pins 4 becomes necessary, the said substitution can be effected without even having to remove the first plate 2 from the press, its being sufficient to remove the die-expeller element 31 from the relative housing 11 and insert another exhibiting the desired characteristics. The problem of the expulsion pins 4 is thus completely solved, since they are removed together with the relative bottom die 3.

The expulsion shafts 14, instead, do not require any operation whatsoever, and remain ready to act on the expulsion plate 13 of the new die-expeller element 31. Thus the expulsion plate 13 does not change in shape and size, while all the elements downstream of the said expulsion plate 13, that is the expulsion pins 4 and the bottom die 3 constitute, operatively speaking from the point of view of the substitution, a single piece.

The substitution of the die-expeller element 31 is very fast since it is sufficient to act on the blocking elements (not illustrated), such as screws, without further manual interventions.

The structure of the die-expeller element 31 further allows the very precise realisation of seatings for the expulsion pins 4 with a single mechanical working both on the bottom die 3 and the extraction box 10, reciprocally blocked.

Concerning the embodiment of figure 6, further elucidation is not necessary since the two die-expeller elements 31 can be substituted in the sliding shutting clamps 5 exactly as if they were connected to the first plate 2.

Also advantageous is the fact of having reduced the length of the expulsion pins 4, which, often being of very small diameter, can easily get damaged due to the considerable loads to which they are subjected.

## Claims

1. A die for the injection molding of numerous series of products, in particular buttons or similar, of the type comprising a first plate (2) supporting a bottom die (3) crossed by a plurality of expulsion pins (4), and a second plate (6), supporting a punch (7) facing the said bottom die (3) and being approachingly and distancingly mobile with the said first plate (2), the said expulsion pins (4) being axially moved by respective command organs (26), characterised in that the said expulsion pills (4) are supported and guided by a support element or extraction box (10) supporting also the said bottom die (3), interpositioned between the said bottom die (3) and the said command organs (26) and housed and blocked interchangeably in a respective housing (11) made in the said first plate (2); the said first plate (2) supporting and guiding a plurality of expulsion shafts (14) parallel and/or aligned to the said expulsion pins (4), connected to the said command organs (26) and acting on the said support element or extraction box (10) for the axial movement of the said expulsion pins (4).

2. A die as in claim 1, characterised in that ends of the said expulsion pins (4) close to the said expulsion shafts (14) are fixed to an expulsion plate (13) arranged perpendicularly to the said expulsion pins (4) and interpositioned between the said expulsion pins (4) and the said expulsion shafts (14).

3. A die as in claim 2, characterised in that the said expulsion plate (13) is slidably housed in a respective housing (12) made in the said extraction box (10) on the opposite side to the support side of the said bottom die (3) and closed by a relative closing plate (15) against which the said expulsion plate (13) is held elastically in contact; the said closing plate (15) being crossed by the ends of the said expulsion shafts (14) destined to come into contact with the said expulsion plate (13) and to move axially the said expulsion pins (4).

4. A die as in claim 1, characterised in that the said extraction box (10) together with at least one bottom die (3) and the respective expulsion pins (4) constitutes a die-expeller element (31) interchangeable as one piece correspondingly with the type of button (28) to be produced.

5. A die as in claim 1, wherein the said bottom die (3) is realised in two parts connected to two lateral plates or sliding closing cheeks (5) mobile in approach or in distancing fromt the said punch (7), characterised in that each part of the said bottom die (3) is connected to a relative support element or extraction box (10) supporting and guiding the relative expulsion pins (4) and interpositioned between the relative part of the bottom die (3) and the said command organs (26).
